# EUROPEAN PATENT APPLICATION

(11) **EP 2 602 103 A1**
(43) Date of publication of application: **12.06.2013**
(21) Application number: 11192229.0
(22) Date of filing: 06.12.2011
(51) Int. Cl.: B32B 1/08, B32B 27/32, F16L 9/12

(54) **Multi-layered pipe**

(71) Applicant: Wavin B.V., 8011 CW Zwolle (NL)
(72) Inventor: Akkerman, Johannes, 7701 BS Dedemsvaart (NL); Kanters, Arnoldus Franciscus Cornelis, 7701 BS Dedemsvaart (NL)
(74) Representative: Mounteney, Simon James

(57) **Abstract**

A multi-layered pipe comprising an inner layer and a middle layer located radially outside the inner layer and an outer layer located radially outside the middle layer, wherein the inner layer and outer layer comprises a polyolefin and the middle layer comprises a polyolefin filled with an additive and the concentration of the additive in the middle layer is less than 10 wt%, with respect to the weight of the middle layer, and wherein the layer thickness of the middle layer is such that the pipe has a thermal expansion coefficient of 5x14⁻⁵ (°C)⁻¹ or lower.

## Description

The invention relates to a multi-layered pipe. Particularly, but not exclusively, the invention relates to a multi-layered pipe for use in a hot or cold fluid transport system, such as a heating or cooling system or a water supply.

Conventionally, pipes for such applications have often been made from metal, but metal pipes suffer from many drawbacks, such as corrosion, chemical reaction and inflexibility. Metal pipes can also be expensive and inefficient to manufacture.

To overcome the disadvantages of metal, it is known to manufacture pipes from a variety of plastics materials. However, whilst plastics pipes offer certain improvements over metal pipes, they can also be relatively weak in comparison. In certain operating environments, such weakness can lead to damage and/or system failure when the pipe is subjected to axial load, system pressurisation or a treatment process such as jetting or flushing.

Multi-layered pipes have therefore been developed in an effort to solve the problems associated with both metal pipes and plastics pipes. Typically, such pipes are made from two layers of polyolefin with an aluminium layer sandwiched in between. A variety of plastics materials are used as the polyolefin, particularly PE or PP (including all variants, such as: PPH = homopolymer, PPR = random, PPC = co-polymer, PPRCT = Crystalline, Temperature resistant). The aluminium layer mainly serves to improve the pipe's structural integrity and enhance its thermal stability (by minimising thermal expansion). A disadvantage of the aluminium layer is that it may become exposed during jointing of the pipe (typically by weld couplers). Such exposure can be structurally detrimental for the pipe and/or contaminate the transported fluid and it should therefore be prevented. This imposes special requirements on the couplers and/or weld process.

The present invention sets-out to provide a multi-layered pipe that overcomes the above-stated disadvantages of the prior art.

Accordingly, the invention provides a multi-layered pipe comprising an inner layer and a middle layer located radially outside the inner layer and an outer layer located radially outside the middle layer, wherein the inner layer and outer layer comprises a polyolefin and the middle layer comprises a polyolefin filled with an additive and the concentration of the additive in the middle layer is less than 10 wt%, with respect to the weight of the middle layer, and wherein the layer thickness of the middle layer is such that the pipe has a thermal expansion coefficient of 5x10⁻⁵ or lower.

The middle layer may be filled with 8 wt% of the said additive.

The pipe may have a thermal expansion coefficient of 4.5x10⁻⁵ (°C)⁻¹ or lower.

The additive may have a coefficient of thermal expansion that is 5% or less of that of the polyolefin of the middle layer.

The thickness of the middle layer may be at least 1.3 times that of the inner layer and the outer layer.

The thickness of the middle layer may be at least twice that of the inner layer and outer layer.

The thickness of the middle layer may be at least three times that of the inner layer and outer layer.

The additive may include glass and/or basalt.

The additive may comprise fibres having a length of from 2 to 6 mm. These fibres may have a length of 3.2 mm.

The additive may comprise fibres having a diameter of from 5 to 25 µm. In particular, the fibres may have a diameter of from 10 to 15 µm, for example 13 µm.

The polyolefin may comprise polypropylene, which may be PPR.

The concentration of the additive relative to the entire pipe may be at least 5.5 wt%, for example 6.7wt%.

The layers of the pipe may have substantially a thickness ratio wherein the inner, middle and outer layers may be 10:80:10.

Embodiments of the invention will now be described with reference to the accompanying drawings wherein:
Figure 1 is a perspective view of an end region of a pipe according to the invention;
Figure 2 is a partial cross-section through the pipe of Figure 1.

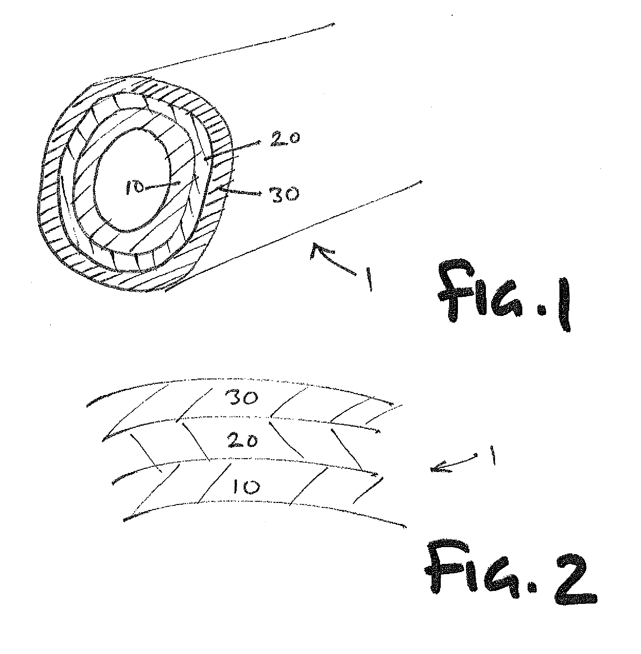

As shown in Figures 1 and 2, a first embodiment of the invention takes the form of a pipe 1. The pipe includes an inner layer 10 and an outer layer 30 and a middle layer 20. The middle layer 20 is located upon a radially outer surface of the inner layer 10. The outer layer 30 is located upon a radially outer surface of the middle layer 20. Although only one middle layer is present in this embodiment, the invention is not so limited and one or more intermediate layers could alternatively be situated between the inner and outer layer.

The inner layer 10 is formed from PPR. Although PPR is considered to be a particularly suitable material for the majority of potential applications, an alternative polyolefin could be used, for example a polyethylene such as PE-RT or cross-linked polyethylene.

The outer layer 30 is formed from PPR. The material used is ideally, but not necessarily, the same as the material used for the inner layer 10.

The middle layer is formed from PPR filled with an additive. In this particular embodiment, the additive is glass, although the invention is not so limited and other embodiments will include alternative additives, such as basalt, synthetic fibres (e.g. carbon), wood fibres or jute fibres. Once again, the PPR could be replaced with an alternative material such as a polyethylene in alternative embodiments. Ideally, but not necessarily, this material would be the same as the material used for the inner layer 10. Generally speaking, the filler material should have a thermal expansion coefficient (CLTE) that is 5% or less of that of the polyolefin of the middle layer. With this in mind, non-limiting examples of suitable polyolefin materials and filler materials are as follows:

| Filler Material | CLTE (x 10⁻⁶ (°C)⁻¹) |
|---|---|
| Glass: | 5 |
| Basalt: | 4.4 - 6.4 |
| Wood: parallel to grain | 3.8 - 5.9 |
| Perpendicular to grain: | 25.4 - 39.1 |
| Aluminium alloys: | 21.5 - 23.6 |

| Polyolefin | CLTE (x 10⁻⁶ (°C)⁻¹) |
|---|---|
| PE (LDPE) | 180 - 400 |
| PE (HDPE) | 106 - 98 |
| PP | 146 - 180 |
| PE-RT | 195 |
| PB | 120 |

The middle layer 20 provides strength, structural integrity and temperature resistance to the pipe 1. The inner layer 10 prevents direct contact between the transported fluid and the middle layer 20 and improves the impact strength of the pipe 1. The outer layer 30 protects the middle layer 20 and improves the impact strength of the pipe 1.

The content of the glass in the middle layer 20 should be less than 10 wt% with respect to the weight of the middle layer 20. It is particularly preferred for the concentration of the glass in the middle layer 20 to be about 8%. In this particular embodiment, the concentration is 8.3%.

**Table I: Burst pressure results 3.5 MPa and 95 C**

| All pipes have a glass fiber (GF) content of 6.7% | | |
|---|---|---|
| Inner-middle-outer layer ratio | GF content middle layer | Average failure time |
| 40 - 20 - 40 | 30 % | 266 h |
| 37 - 26 - 37 | 25 % | 307 h |
| 33 - 33 - 33 | 20 % | 422 h |
| 28 - 44 - 28 | 15 % | 503 h |
| 17 - 66 - 17 | 10 % | 537 h |

**Table II: Burst pressure results 3.5 MPa and 95 C**

| GF content in pipe | Layer thickness ratio | GF content middle layer | Average failure time |
|---|---|---|---|
| 0 % | 100 | 0 % | 1025 h |
| 2 % | 45 - 10 - 45 | 20 % | 1178 h |
| 2 % | 40 - 20 - 40 | 10 % | 1184 h |
| 2 % | 30 - 40 - 30 | 5 % | 1358 h |
| 4 % | 40 - 20 - 40 | 20 % | 724 h |
| 4 % | 30 - 40 - 30 | 10 % | 998 h |
| 4 % | 10 - 80 - 10 | 5 % | 1573 h |
| 8 % | 30 - 40 - 30 | 20 % | 118 h |
| 8 % | 10 - 80 - 10 | 10 % | 220 h |

From the tables one can learn that the thicker the middle layer with respect to the inner and outer layer the pipe shows a longer average failure time.

The abovementioned concentrations provide a significant improvement in the overall burst pressure strength of the pipe 1. The reason for this is that the inclusion of filler material in the polyolefin forms impurities that weaken the matrix-structure of the polyolefin rather than strengthen it. By constraining the filler content to below 10 wt%, the impurities no longer have a dominant effect on the strength.

The thickness of the layers 10, 20, 30 will be determined by the impact test and fall test.

In this embodiment, the middle layer 20 has a thickness that is approximately eight times that of the inner layer 10.

The overall CLTE for the pipe is approximately 4.5x10⁻⁵ (°C)⁻¹.

The thickness ratio of the three layers in this embodiment is 10:80:10.

The middle layer 20 is filled with 8.3 wt% glass fibres. The overall glass content of the pipe is 6.6 wt%.

This pipe has a particularly good burst pressure strength of about 4.3 MPa at 95°C.

Although the outer layer 30 is situated directly on the middle layer 20, this is not essential and one or more intermediate layers could be located between them.

The outer layer 30 is partly included in this embodiment to provide a more visually and physically acceptable finish to the outer surface of the pipe 1. It also enhances the burst pressure of the pipe and facilitates the welding of fittings to the pipe 1.

The relative thicknesses of the layers and the concentration of the filler material in the middle layer 20 can be adjusted in various ways and still provide beneficial results like a low thermal expansion coefficient and good hydrodynamic strength. For example, the concentration of the additive relative to the pipe as a whole may be as high as 6.7 wt%.

Many further variations and modifications will suggest themselves to those skilled in the art upon making reference to the above embodiments, which are given by way of example and which are not intended to limit the scope of the invention as set out in the appended claims.

## Claims

1. A multi-layered pipe comprising an inner layer and a middle layer located radially outside the inner layer and an outer layer located radially outside the middle layer, wherein the inner layer and outer layer comprises a polyolefin and the middle layer comprises a polyolefin filled with an additive and the concentration of the additive in the middle layer is less than 10 wt%, with respect to the weight of the middle layer, and wherein the layer thickness of the middle layer is such that the pipe has a thermal expansion coefficient of 5x10⁻⁵ (°C)⁻¹ or lower.

2. A multi-layered pipe according to Claim 1, wherein the middle layer is filled with 8 wt% of the said additive.

3. A multi-layered pipe according Claim 1 or 2, wherein the pipe has a thermal expansion coefficient of 4.5x10⁻⁵ (°C)⁻¹ or lower.

4. A multi-layered pipe according to any preceding claim, wherein the additive has a thermal expansion coefficient that is 5% or less of that of the polyolefin of the middle layer.

5. A multi-layered pipe according to any preceding claim, wherein the thickness of the middle layer is at least 1.3 times that of the inner layer and the outer layer.

6. A multi-layered pipe according to Claim 5, wherein the thickness of the middle layer is at least twice that of the inner layer and the outer layer.

7. A multi-layered pipe according to Claim 6, wherein the thickness of the middle layer is at least three times that of the inner layer and the outer layer.

8. A multi-layered pipe according to any preceding claim, wherein the additive includes glass and/or basalt.

9. A multi-layered pipe according to any preceding claim, wherein the additive comprises fibres having a length of from 2 to 6 mm.

10. A multi-layered pipe according to Claim 9, wherein the fibres have a length of 3.2 mm.

11. A multi-layered pipe according to any preceding claim, wherein the polyolefin comprises polypropylene.

12. A multi-layered pipe according to Claim 11, wherein the polypropylene is PPR.

13. A multi-layered pipe according to any preceding claim, wherein the concentration of the additive relative to the entire pipe is at least 5.5 wt%.

14. A multi-layered pipe according to Claim 13, wherein the concentration of the additive relative to the entire pipe is 6.7wt%.

15. A multi-layered pipe according to any preceding claim, wherein the thickness ratio of the inner, middle and outer layers is 10:80:10.
